# EUROPÄISCHE PATENTSCHRIFT

(11) **EP 0 522 486 B1**
(45) Veröffentlichungstag und Bekanntmachung des Hinweises auf die Patenterteilung: **09.10.1996**
(21) Anmeldenummer: 92111435.1
(22) Anmeldetag: 06.07.1992
(51) Int. Cl.: A61C 3/025, B24C 9/00

(54) **Bearbeitungsgerät zum Bearbeiten von feinwerktechnischen, insbesondere dentaltechnischen Werkstücken in einem von einem Gehäuse umgebenen Bearbeitungsraum**
Processing apparatus for processing fine technical, especially dental, workpieces in a machining chamber surrounded by a housing
Appareil de traitement pour traiter fines techniques, en particulier pièces d'oeuvres de dentisterie dans une chambre d'usinage entourée d'un boîtier

(30) Priorität: 11.07.1991 DE 4123020
(43) Veröffentlichungstag der Anmeldung: 13.01.1993
(73) Patentinhaber: KALTENBACH & VOIGT GMBH & CO., D-88400 Biberach (DE)
(72) Erfinder: Püschner, Georg, W-7970 Leutkirch (DE)
(74) Vertreter: Schmidt-Evers, Jürgen, Dipl.-Ing.

(56) Entgegenhaltungen:
- EP-A- 0 150 338
- DE-A- 3 119 087
- DE-A- 3 727 441
- DE-U- 8 622 315
- US-A- 3 858 360
- US-A- 4 928 440
- US-A- 5 031 373

## Beschreibung

Die Erfindung bezieht sich auf ein Bearbeitungsgerät nach dem Oberbegriff des Anspruchs 1.

Die Bearbeitung von feinwerktechnischen, insbesondere dentaltechnischen Werkstücken ist in den meisten Fällen mit Gefahren für die die Bearbeitung durchführende Person verbunden. Dies ist zum einen durch die Bearbeitung selbst und/oder durch die Werkstoffe der Werkstücke vorgegeben. Z.B. beim Strahlen von Werkstücken besteht die Gefahr von Verletzungen durch das Strahlmittel selbst und auch durch den Staub, der beim Strahlen verursacht wird und aus dem Strahlmittel selbst und auch aus abgearbeiteten Partikeln der Werkstücke besteht. Insbesondere dentaltechnische Werkstücke bestehen aus Materialien, z.B. Quarzwerkstoffen, die insbesondere in Form von Kleinpartikeln, z.B. Staub gesundheitsgefährlich sind (s. Silikosegefahr).

Bei dentaltechnischen Werkstücken handelt es sich in vielen Fällen um Gußstücke, die nach Modellen gegossen werden. Dazu wird zunächst ein Wachsmodell erstellt, welches in einer Formmasse, die in vielen Fällen quarzhaltig ist, eingebettet wird. Danach wird das Wachs ausgeschmolzen und in den so gewonnenen Hohlraum (Negativform) flüssiges Metall gegossen, wozu verschiedene Gießverfahren angewendet werden können. Nach dem Abkühlen muß die Formmasse entfernt werden. Dieser in der Fachsprache mit Ausbetten bezeichnete Vorgang geschieht durch Aufsprengen mit einem Ausbettmittel, z.B. einem Meißel. Dabei werden zwangsläufig Partikel und insbesondere gesundheitsschädigende Stäube frei, vor denen die die Bearbeitung durchführende Person zu schützen ist. Um dies zu gewährleisten, wurden insbesondere zum Strahlen von Werkstücken Bearbeitungsgeräte geräte mit einem von einem Gehäuse umgebenen Bearbeitungsraum entwickelt, der an eine Absaugvorrichtung anschließbar bzw. angeschlossen ist, so daß freiwerdende Partikel und Stäube ohne Gesundheitsgefährdung für die bearbeitende Person abgeführt werden können. Die Person hat durch ein Fenster und zwei abdichtbare Durchgriffsöffnungen für ihre Hände einen manuellen Zugriff und visuellen Kontakt zum Bearbeitungsraum und zur Ausführung der Bearbeitung. Ein Bearbeitungsgerät dur im oberbegriff des Anspruchs 1 angegebenen Art ist in der DE-A-3 119 087 beschrieben.

Der Erfindung liegt die Aufgabe zugrunde, ein Bearbeitungsgerät der eingangs angegebenen Art so auszugestalten, daß der arbeitsmäßige Aufwand verringert und die Bearbeitung besser und effizienter ausgeführt werden können.

Diese Aufgabe wird durch die Merkmale des Anspruchs 1 gelöst.

Die Erfindung zeigt eine vorteilhafte Ausgestaltung auf, bei denen die Werkstücke ohne Gesundheitsgefährdung und dabei rationell im Bearbeitungsraum bearbeitet werden können. Dabei werden mehrere Arbeitsplätze im Bearbeitungsraum zu einem Arbeitsplatz vereinigt.

In den Unteransprüchen sind weitere vorteilhafte Merkmale zur Erleichterung und Erhöhung der Effizienz der Bearbeitung enthalten. Dies beruht u.a. auf einer handhabungsfreundlichen Anordnung der einzelnen Werkzeuge, wobei nicht zuletzt auch für eine gute Absaugung gesorgt wird, so daß nach dem öffnen des Bearbeitungsraums so wenig wie möglich umwelt- bzw. gesundheitsschädigende Teilchen in die Umgebung gelangen.

Nachfolgend wird die Erfindung anhand bevorzugter Ausführungsbeispiele und einer Zeichnung näher erläutert. Es zeigt:
- Fig. 1: ein erfindungsgemäßes Bearbeitungsgerät, insbesondere Bearbeitungsgerät, für feinwerktechnische, insbesondere dentaltechnische Werkstücke in perspektivischer Vorderansicht;
- Fig. 2: das Bearbeitungsgerät in der Seitenansicht im vertikalen Schnitt;
- Fig. 3: eine zur Bedienungsseite hin ausziehbare Schublade des Bearbeitungsgeräts zur Aufnahme von mehreren Strahlmittelbehältern;
- Fig. 4: das Bearbeitungsgerät in der Vorderansicht, teilweise geschnitten;
- Fig. 5: einen Strahlmittelbehälter im vertikalen Halbschnitt in vergrößerter Darstellung;

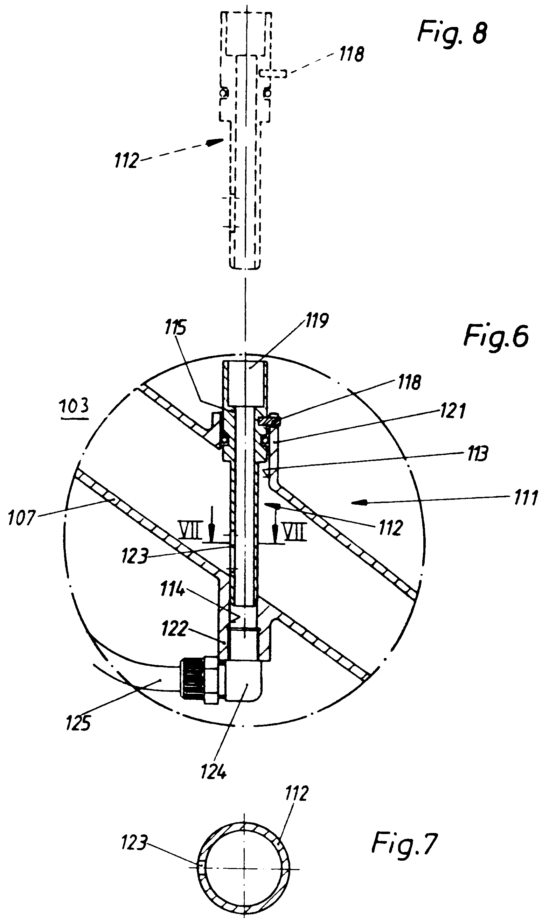

- Fig. 6: die in Fig. 2 mit VI gekennzeichnete Einzelheit in vergrößerter Darstellung;
- Fig. 7: den Schnitt VII-VII in Fig. 6;
- Fig. 8: ein in Fig. 6 dargestelltes Einzelteil des Bearbeitungsgeräts in Einzeldarstellung;
- Fig. 9: den Bearbeitungsraum des Bearbeitungsgeräts mit Blickrichtung auf das Sichtfenster;
- Fig. 10 und 11: eine Klemmvorrichtung für Stulpen oder Handschuhe in ihrer Klemmposition und in ihrer Montagebereitschaftsposition in axialen Schnitt;
- Fig. 12: eine Klemmvorrichtung in abgewandelter Ausgestaltung;
- Fig. 13: eine Strahldüse für Umlaufstrahlung im axialen Schnitt;
- Fig. 14: einen elektro-pneumatischen Steuerungsplan für ein als Bearbeitungsgerät ausgebildetes erfindungsgemäßes Bearbeitungsgerät;

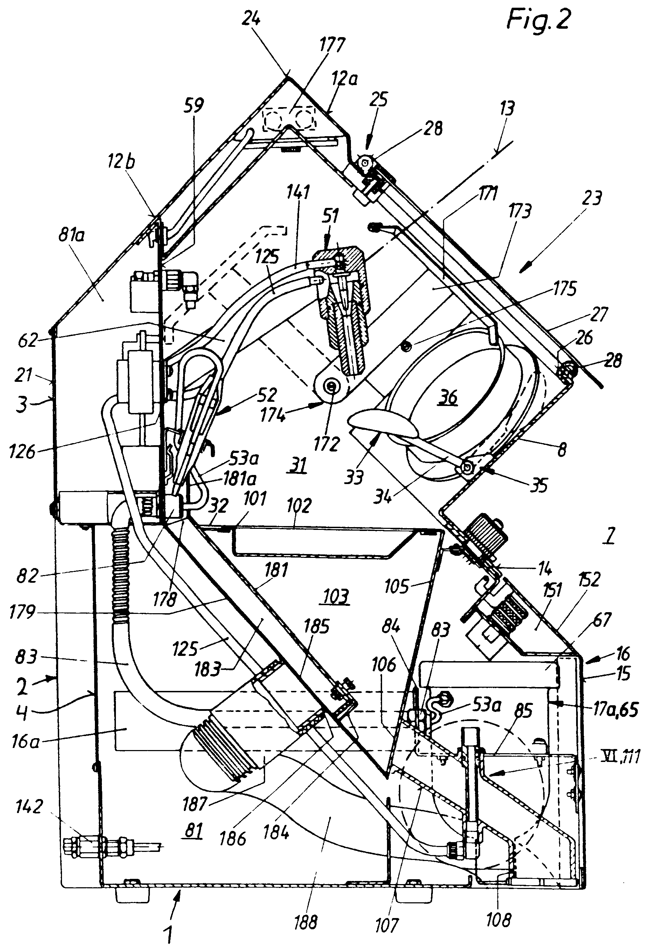

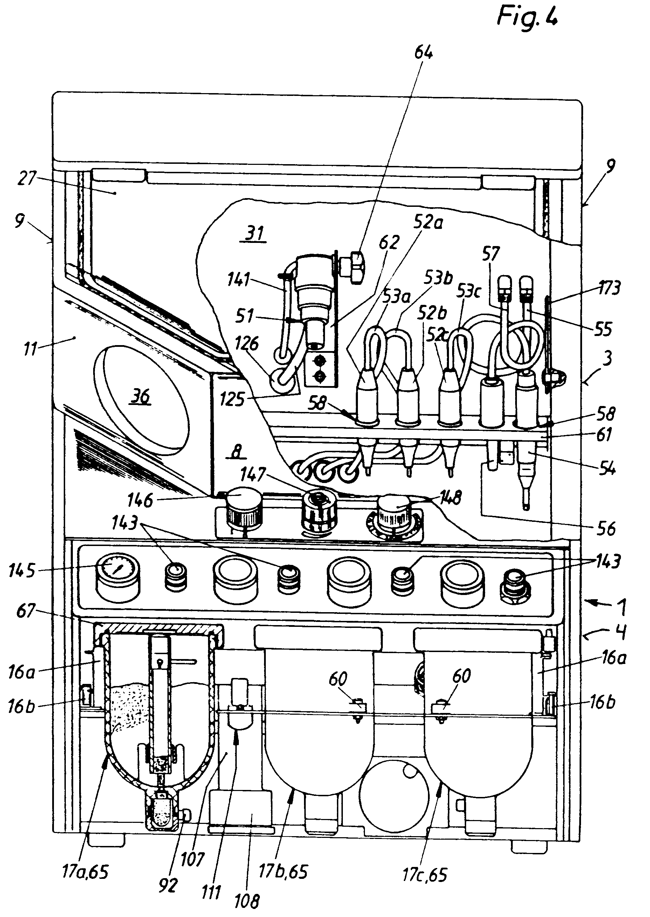

Das Bearbeitungsgerät 1 ist für stehendes Arbeiten konzipiert. Sein Gehäuse 2 ist deshalb so hoch ausgeführt, daß sein Strahlgehäuse 3 sich in einer für stehendes Arbeiten ergonomisch richtigen Arbeitshöhe befindet. Unterhalb des Strahlgehäuses 3 ist das Gehäuse 2 als Untergehäuse 4 und zur Aufnahme der Einzelteile zur Bildung, Zuführung und Abführung des Strahlmittels sowie weiterer Teile des Bearbeitungsgeräts 1 ausgebildet. Das kastenförmige Strahlgehäuse 3 ist zur vorne angeordneten Bedienungsseite 7 hin gekippt angeordnet, so daß gemäß Fig. 2 von der Seite gesehen das obere Ende des Strahlgehäuses 3 dachförmig angeordnet ist und die Vorderwand 8 des Strahlgehäuses 3 sich zur Bedienungsseite 7 hin schräg aufwärts erstreckt. Im vorderen seitlichen Kantenbereich ist das Strahlgehäuse 3 durch sich von der verschmälerten Vorderwand 8 zu den Seitenwänden 9 hin erstreckende Schrägwände 11 stark abgeflacht. Die Vorderwand 8, die Seitenwände 9, die Schrägwände 11 und die vordere und hintere Dachwand 12a,12b des Strahlgehäuses 3 sind parallel zu dessen nach vorne gekippten Kippachse 13 prismenförmig angeordnet. Die schräge Vorderwand 8 bildet mit einer entgegengesetzt schräg verlaufenden Vorderteilwand 14 des Untergehäuses 4 eine vorderseitige Tailierung des Gehäuses 2. Unterhalb der Vorderteilwand 14 befindet sich die vertikale Stirnwand 15 einer Schublade 16, in der parallel zur Bedienungsseite 7 mehrere, insbesondere drei Strahlmittelbehälter 17a,17b,17c angeordnet sind. Die Schublade 16 weist zu beiden Seiten je eine horizontal nach hinten ragende Schubladenschiene 16a auf, die in einer zugehörigen, innen an der Seitenwand 9 befestigte Führungsschiene 16b (Fig. 4) horizontal verschiebbar geführt ist. Die dem Strahlgehäuse 3 und dem Untergehäuse 4 gemeinsamen Seitenwände 9 und die in die hintere Dachwand 12b auslaufende Rückwand 21 sind vertikal angeordnet.

In der vorderen Dachwand 12a befindet sich ein Sichtfenster 23, das sich von einer einen Abstand vom First 24 des Strahlgehäuses 3 aufweisenden Fensteroberkante 25 nach unten und seitlich bis zum Umfang des Strahlgehäuses 3 erstreckt und somit eine sechseckige Form aufweist. Das Sichtfenster 13 ist wahlweise zu öffnen und zu schließen und umfaßt eine Fensteröffnung 26 in der vorderen Dachwand 12a, die durch eine Scheibe 27 aus durchsichtigem Material, insbesondere Glas, außen abgedeckt ist, die im Bereich der Fensteroberkante 25 in seitlichen Gelenken 28 gelagert und somit hoch- und herunterklappbar ist. Zur Abdichtung des Sichtfensters 23 ist am Umfangsrand der Fensteröffnung 26 eine elastische Dichtung 28 angeordnet, auf der die Scheibe 27 mit ihrem Gewicht aufliegt. Unterhalb des hinteren Bereichs des Sichtfensters 23 befindet sich im Bearbeitungsraum 31 oberhalb seines Zwischenbodens 32 ein Auflagerteil 33 für die Hände der Bedienungsperson und/oder für zu behandelnde Werkstücke, das bei der vorliegenden Ausgestaltung mit einer konvex gerundeten Oberseite pilzkopfförmig geformt und am freien Ende eines Tragarms 34 befestigt ist, der so schwenkbar am Strahlgehäuse 3 gelagert ist, daß das Auflagerteil 33 zwischen der in Fig. 2 mit durchgezogenen Linien dargestellten Arbeitsstellung und der mit strichpunktierten Linien dargestellten Bereitsschaftsstellung schwenkbar und in der jeweiligen Endstellung durch Eigengewicht positioniert, so daß eine unbeabsichtigte Verschwenkung nicht erfolgt. In der Bereitschaftsstellung befindet sich das Auflagerteil 33 am Rand des Bearbeitungsraums 31, vorzugsweise vor seinem Totpunkt an der Innenseite der schrägen Vorderwand 8 Die Lagerung 35 für den Tragarm 34 ist vorzugsweise an der Innenseite der Vorderwand 8 angeordnet und wird bei der vorliegenden Ausgestaltung durch eine Steckverbindung gebildet, in die der Tragarm 34 wahlweise handhabungsfreundlich einsteckbar und auch wieder herausziehbar ist, und die eine Schwenkung des Tragarms 34 zwischen den beiden Endstellungen gewährleistet. Zur Begrenzung der Schwenkbewegung nach unten über die Arbeitsstellung hinaus ist ein Anschlag für den Tragarm 34 im Bereich der Lagerung 35 vorgesehen. Bei Nichtgebrauch ist das Auflagerteil 33 somit handhabungsfreundlich nach oben in die Bereitschaftsstellung zu verschwenken, in der es den Arbeitsraum 31 freigibt. Aufgrund der Steckbarkeit läßt sich das Auflagerteil 33 nicht nur leicht montieren bzw. demontieren, sondern es sind vorzugsweise mehrere Auflagerteile 33 unterschiedlicher Form vorhanden, die je nach Werkstückart und/oder -form und/oder -bearbeitungsart habungsfreundlich in die vorhandene Lagerfassung einsetzbar ist.

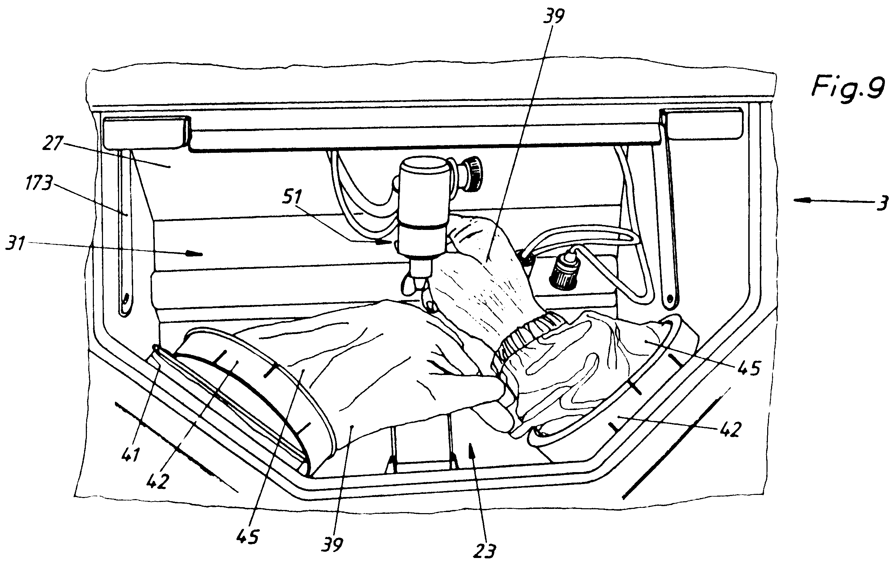

Der manuelle Zugriff zum Bearbeitungsraum 31 ist zum einen durch das geöffnete Sichtfenster 23 und zum anderen durch zwei Durchgrifflöcher 36 gewährleistet, von denen jeweils eines in jeder vorderen Schrägwand 11 handhabungsfreundlich angeordnet ist. Der Rand der Durchgriffslöcher 36 ist mit einem gerundeten Verkleidungsring 37 ausgekleidet. An den Innenrändern der Durchgriffslöcher 36 ist wahlweise jeweils ein Handschuh 38 oder eine Stulpe 39 (s. Fig. 9 bis 12), befestigbar, die zum Schutz der Hände der Bedienungsperson und zur Abdichtung der Durchgriffslöcher 36 dienen. Vorzugsweise ist eine handhabungsfreundlich bedienbare Klemmvorrichtung zur Befestigung vorgesehen, bestehend aus einem vom zugehörigen Durchgriffsloch 36 nach innen vorragenden Rohrstutzen 41, der eine koaxiale Verlängerung des Polsterringes 40 sein kann und ein Klemmring 42, der vom Bearbeitungsraum 31 her auf den Rohrstutzen 41 aufschiebbar ist. Der Rohrstutzen 41 weist an seinem inneren Ende einen kleinen radial abstehenden Klemmwulst 43 auf. Zwecks Verbesserung der Griffestigkeit ist der Klemmring 42 an seinem inneren Ende ebenfalls mit einem kleinen nach außen vorstehenden Wulst 44 versehen. Der Außendurchmesser des Klemmwulstes 43 und der Innendurchmesser des Klemmrings 42 sind so aufeinander abgestimmt, daß der zum Rohrstutzen 41 bin geringfügig konisch divergent ausgestaltete Klemmring 42 nach vorherigem Aufsetzen des freien Manschettenrandes 45 des Handschuhs 38 oder der Stulpe 39 auf den Rohrstutzen 41 von innen auf dem Klemmwulst 43 aufschiebbar und festklemmbar ist. Zur Vergrößerung der Flexibilität und deshalb leichteren Handhabung weist der Klemmring 42 an seinem dem Rohrstutzen 41 zugewandten Ende mehrere auf dem Umfang gleichmäßig verteilt angeordnete Längsschlitze 46 auf. Vorzugsweise sind auch an dem inneren Ende des Klemmrings 42 auf dem Umfang verteilt angeordnete Längsschlitze 47 vorgesehen, die mit den vorgenannten Längsschlitzen 46 überlappend angeordnet Bein können und in diesem Fall zu diesen in Umfangsrichtung versetzt angeordnet sind. Der Rohrstutzen 41 bzw. der Polsterring 37 und der Klemmring 42 bestehen vorzugsweise aus Kunststoff. Zum Lösen des Handschuhs 38 oder der Stulpe 39 ist lediglich der Klemmring 42 mit der gegenüberliegenden Hand von innen abzuziehen, wonach auch der Handschuh oder die Stulpe abgezogen werden kann.

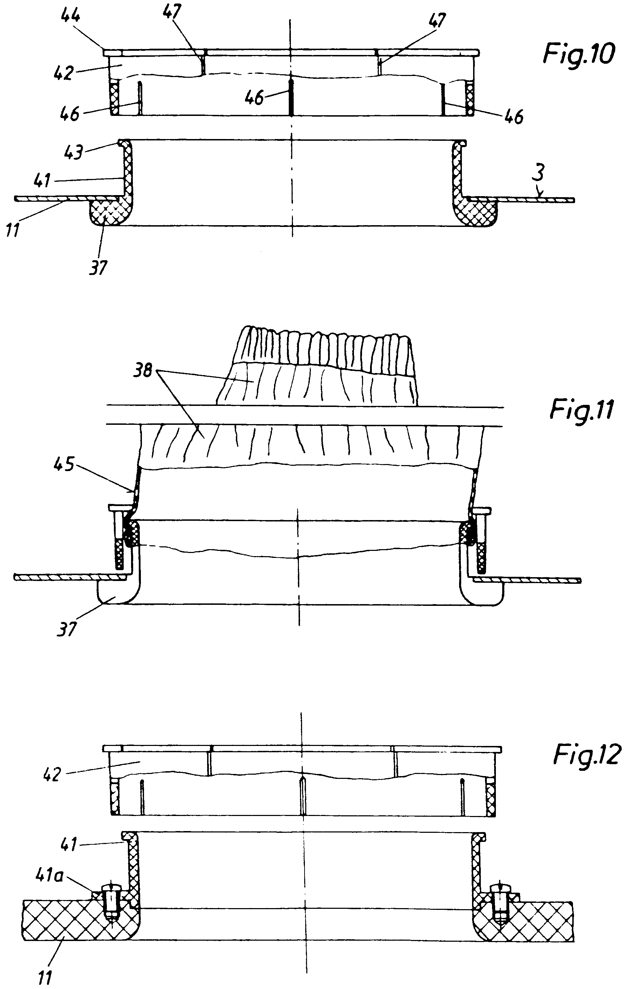

Bei der Ausgestaltung nach Fig. 12 ist der Rohrstutzen 41 mit einem Flansch 41a an der Innenseite des vorhandenen Lochrandes verschraubt.

Das Bearbeitungsgerät 1 ist dazu eingerichtet, mehrere Bearbeitungsarten an den insbesondere dentaltechnischen Werkstücken auszuführen, nämlich Strahlen mit festen Partikeln, Ausbetten und Ausblasen. Zum Strahlen sind wenigstens zwei Strahldüsen 51,52 (Fig. 4) vorgesehen, von denen die eine Strahldüse 51 stationär im oberen mittleren Bereich des Behandlungsraums 31 in einem Abstand oberhalb des Auflagerteils 33 angeordnet und vorzugsweise die andere Strahldüse 52 bewegbar angeordnet ist, vorzugsweise durch einen Strahlgriffel gebildet ist, der durch eine flexible Zuführungsleitung 53 an die zugehörige Strahleinrichtung angeschlossen ist. Dabei ist die stationäre Strahldüse 51 an eine Umlaufstrahleinrichtung und die bewegbare Strahldüse 52 an eine Einwegstrahleinrichtung angeschlossen. Vorzugsweise sind drei bewegbare Strahldüsen 52a,52b,52c vorgesehen, die jeweils mit einer eigenen Strahlleitung 53a,53b,53c an einen eigenen Strahlmittelbehälter 17a,17b,17c angeschlossen sind, die mit unterschiedlichem Strahlmittel, z.B. Korund, Aluminiumoxyd (Al₂O₃) oder Glasperlen und dgl. befüllbar sind. Die beweglichen Strahldüsen 52a,52b,52c sind jeweils an eine Einweg-Strahleinrichtung angeschlossen.

Zum Ausbetten ist ein Meißel 54, insbesondere ein Pneumatikmeißel vorgesehen, der durch eine flexible Versorgungsleitung 55 mit der zugehörigen elektrischen oder pneumatischen Versorgungseinrichtung verbunden ist. Ferner ist eine Luftdüse 56 vorgesehen, die durch eine flexible Luftleitung 57 mit der vorhandenen Drucklufteinrichtung verbunden ist.

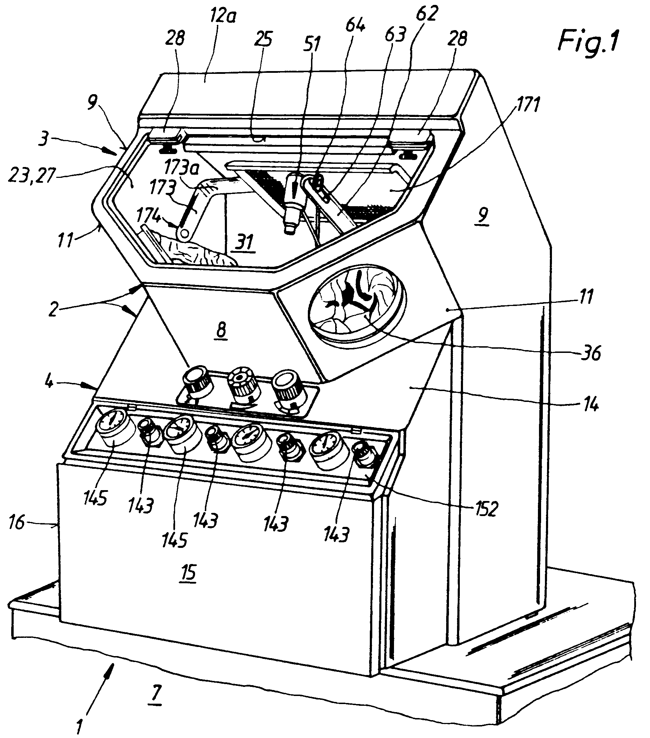

Die beweglichen Strahldüsen 52a,52b,52c, der Meißel 54 und die Luftdüse 56 sind in ihrer jeweiligen Bereitschaftsstellung in eine Steckfassung deponierbar, die durch Stecklöcher 58 in einer horizontalen, an der inneren Rückwand 59 des Behandlungsraums 31 befestigten Steckleiste 61 angeordnet sind. Der Meißel 54 kann in seiner Bereitschaftsstellung alternativ unterhalb des Auflagerteils 33 bzw. im vorderen Bereich des Strahlraums 31, vorzugsweise auf dessen Boden 32, abgelegt werden. Die stationäre Strahldüse 51 ist an einem von der inneren Rückwand 59 schräg nach oben vorragenden Tragarm 62 befestigt. Vorzugsweise ist auch diese an sich stationäre Strahldüse 51 innerhalb eines gewissen Bewegungsspielraums einstellbar, vorzugsweise nach vorne bzw. hinten verschiebbar und/oder schwenkbar und in der jeweiligen Einstellung feststellbar. Hierzu kann ein in Fig. 1 dargestelltes Langloch 63 und eine es durchfassende und darin verschiebbare Feststellschraube 64 dienen, um deren Achse die Strahldüse 51 in gelöster Position schwenkbar ist.

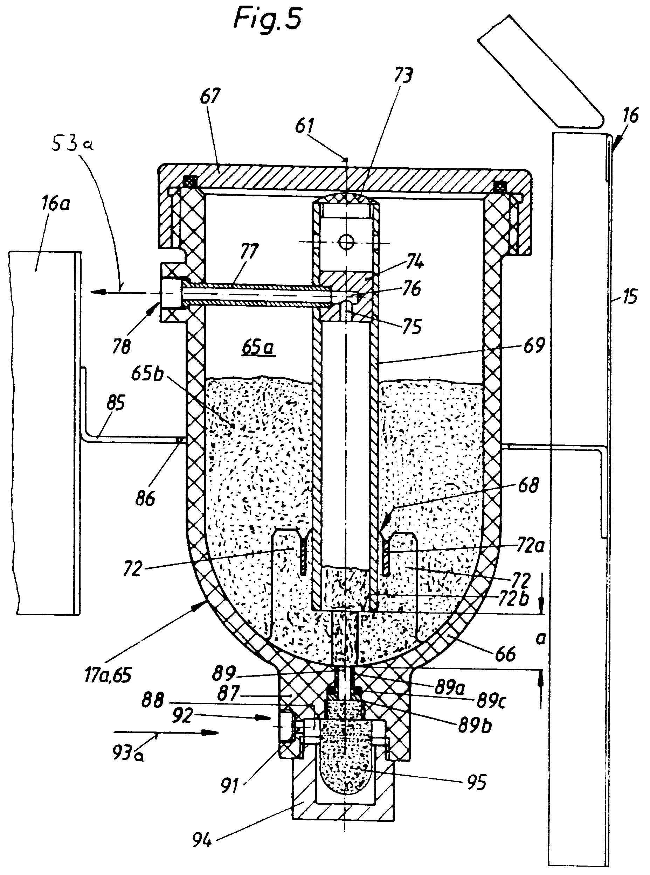

Jeder Strahlmittelbehälter 17a,17b,17c ist durch einen vorzugsweise runden Topf 65 mit einem kugelförmig gerundeten Topfboden 66 und einem Deckel 67 gebildet, der mittels Außengewinde am oberen Rand des Topfes 65 und Innengewinde an einem zylindrischen Gewindestutzen des Deckels 67 auf den Topf 65 aufschraubbar und abgedichtet ist (Fig. 2 bis 5). Es kann auch ein Bajonettverschluß für den Deckel 67 vorgesehen sein.

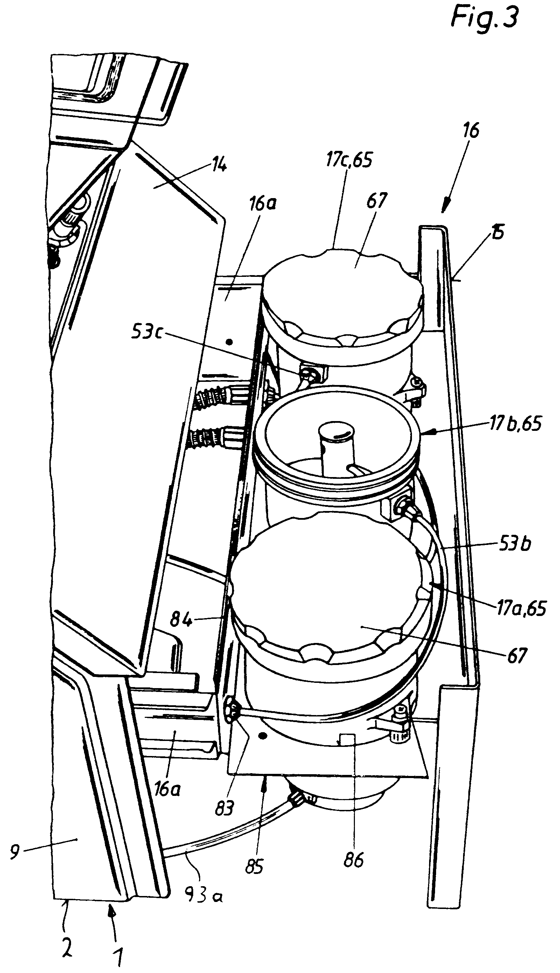

Im zentralen Grundbereich des Topfbodens 66 ist eine Steckfassung 68 für ein von oben einsteckbares Steigrohr 69 vorgesehen, die durch mehrere, z.B. drei um die vertikale Mittelachse 61 des Topfes 65 verteilt angeordnete vertikale Stege 72 gebildet sein kann, die an den vorzugsweise aus Kunststoff bestehenden Topf 65 einstückig angeformt sind. Das Steigrohr 69 erstreckt sich bis zum Deckel 67 und kann oben durch einen Stopfen 73 verschlossen sein. In einem Abstand unterhalb des oberen Endes sitzt im Steigrohr 69 ein Durchführungsstopfen 74, der in seinem unteren Bereich einen axialen Kanal 75 aufweist, von dem ein radialer Kanal 76 seitlich abzweigt, in den ein radiales Verbindungsrohr 77 dicht eingesetzt ist, das an seinem äußeren Ende mit einem in die Wandung des Topfes 65 eingeschraubten Anschlußstutzen 78 dicht verbunden ist. An den Anschlußstutzen 78 ist die zugehörige flexible Strahlleitung 53a,53b,53c angeschlossen. Die Strahlleitungen 53a,53b,53c erstrecken sich im Hohlraum 81 des Untergehäuses 4 nach hinten und oben in einen hinter den Behandlungsraum 31 angeordneten Hohlraumteil 81a, der zwischen der äußeren und der inneren Rückwand 21 und 59 angeordnet ist. Hier durchfassen sie jeweils die innere Rückwand 59 in einer Durchführungsverschraubung 82 (Fig. 2), und sie erstrecken sich im Behandlungsraum 31 weiter zur zugehörigen beweglichen Strahldüse 52a,52b,52c. Im Untergehäuse 4 erstrecken sich die Strahlleitungen 53a,53b,53c in einer flexiblen Schutzrohrleitung 83, die an die Durchführungsverschraubung 82 angeschlossen ist und sich in Richtung auf den zugehörigen Strahlmittelbehälter 17a,17b,17c entweder bis zu dessen Anschlußstutzen 78 oder bis zu einer weiteren Verschraubung 83 erstreckt, die einen vorzugsweise vertikalen Steg 84 durchfaßt, der Teil einer horizontalen Tragschiene 85 ist, in der die Strahlmittelbehälter 17a,17b,17c in einer sich parallel zur Bedienungsseite 7 erstreckenden Reihe jeweils in einem Loch 86 von oben eingesetzt sind und mittels angeformten Schraubansätzen 60 anschraubbar sind. Die Tragschiene 85 kann vorzugsweise ein Z-förmiges Profil sein, und sie ist insbesondere innen an der Stirnwand 15 der Schublade 16 befestigt. Vorzugsweise sind die beiden seitlichen Schubladenschienen 16a am Steg 84 der Tragschiene 85 befestigt. Die Aufnahme der Strahlleitungen 53a,53b,53c als Schlauch in der zugehörigen flexiblen Schutzrohrleitung 83 ist aus mehreren bedeutenden Gründen vorteilhaft. Die Strahlleitungen 53a,53b,53c können leicht und schnell ausgetauscht werden, da sie leicht und schnell aus der zugehörigen Schutzrohrleitung 83 herausgezogen werden können und die neuen Strahlleitungen durch die Schutzrohrleitung 83 hindurchgeführt werden kann, was entweder vom Behandlungsraum 31 oder von der geöffneten Schublade 16 her problemlos erfolgen werden kann. Mit einem öfteren Austausch der Strahlleitungen 53a,53b,53c ist zu rechnen, weil diese naturgemäß einem Verschleiß unterliegen. Aufgrund der Flexibilität der Strahlleitungen 53a,53b,53c und der Schutzrohrleitungen 83 ist auch die Beweglichkeit der Schublade 16 gewährleistet, in der die Strahlmittelbehälter 17a,17b,17c zwischen einer Beschickungsposition vor dem Untergehäuse 4 (s. Fig. 3) und einer in das Untergehäuse 4 eingeschobenen Position verschiebbar sind. Ferner bilden die Schutzrohrleitungen auch einen Schutz und schützen das Untergehäuse vor Verunreinigungen beim Bersten einer Strahlleitung.

An der Unterseite jedes Strahlmittelbehälters 17a,17b,17c ist zentral ein Materialansatz 87 angeformt, in den von unten ein Sackloch 88 eingearbeitet ist, von dem sich koaxial nach oben ein Kanal 89 in den Innenraum 65a des zugehörigen Topfes 65 zentral zwischen die Stege 72 erstreckt. Vom Sackloch 88 erstreckt sich radial ein Kanal 91, an den eine in den Materialansatz 87 schraubbare Verschraubung 92 anschließbar ist, die mit einer Zuführungsleitung 93a,93b,93c für Druckluft verschraubt ist. Das Sackloch 88 ist durch einen topfförmigen Schraubdeckel 94 verschließbar. Im Sackloch 88 ist ein Luftfilter 95a,95b,95c angeordnet, das mit einem Filterfuß in den Topfboden 66 eingeschraubt sein kann und einen Luftdurchgang zwischen den Kanälen 91 und 89 gewährleistet. Die Stege 72 sind im Bereich ihrer oberen Enden durch einen Ringbund 72a stabilisiert, der mit ihnen und dem Topf 65 einstückig spritzgegossen oder in Stegschlitze eingesteckt sein kann. Die Stege 72 sind mit ihren Innenlängskanten in einem Abstand von der Mittelachse 61 des Topfes 65 angeordnet und in einem vertikalen Abstand a vom Behälterboden 66 zur Bildung einer Auflagerschulter 72b für das Stützrohr 69 entsprechend dessen Durchmesser ausgespart. Der Kanal 89 befindet sich in einer Hülse 89a mit einem Flansch 89b an ihrem unteren Ende, der mittels eines O-Rings 89c an einer Innenschulter abgedichtet und nach oben abgestützt ist. Die Hülse 89a wird von unten in ein entsprechendes Loch im Behälterboden 66 eingesetzt. In den Strahlmittelbehältern 17a,17b,17c, die jeweils ein wesentliches Funktionsteil der zugehörigen Einweg-Strahleinrichtung sind, wird das zum Strahlen benötigte Luft/Strahlmittel/Gemisch gebildet, was weiter unten noch beschrieben wird.

Zur Wartung der zum Befüllen der Strahlmittelbehälter 17a,17b,17c wird die Schublade 16 nach vorne herausgezogen, wodurch die Strahlmittelbehälter in eine Position außerhalb des Untergehäuses 4 mitbewegt werden, in der sie gut zugänglich sind (Fig. 3). Danach wird die Schublade 16 mit den Strahlmittelbehältern 17a,17b,17c wieder in das Untergehäuse 4 eingeschoben.

Im Zwischenboden 32 ist ein Loch 101 vorgesehen, in dem ein Sieb 102 angeordnet ist, das strahlmitteldurchlässig ist und mit dem Strahlmittel verkleinerte Werkstückteile zurückhält. Unter dem Zwischenboden 32 ist ein nach unten pyramidenförmig konvergenter Sammelkasten 103 angeordnet. Die Form des Sammelkastens 103 ist derart unsymmetrisch, daß seine nach unten weisende Spitze - von der Bedienungsseite 7 her gesehen - sich zwischen zwei Strahlmittelbehältern, hier den Strahlmittelbehältern 17a,17b befindet. Im Bereich der Spitze ist in der Vorderwand 105 des Sammelkastens 103 ein viereckiges Auslaßloch 106 vorgesehen, an das ein sich schräg nach unten und vorne erstreckendes Auslaßrohr 107 entsprechend viereckigen Querschnitts mittels einer Dichtung dicht angeschraubt ist. Das Auslaßrohr 67 erstreckt sich schräg nach unten zwischen den Strahlmittelbehältern 17a,17b und ist in deren Bereich in Form eines runden Anschlußstutzens 108 vertikal nach unten abgewinkelt. An diesen Anschlußstutzen 108 ist mittels einer Gewindeverschraubung oder eines Bajonettverschlusses eine nicht dargestellte Abführungsleitung für benutztes Strahlmittel anschließbar.

Die die stationäre Strahldüse 51 aufweisende Umlauf-Strahleinrichtung verwendet benutztes Strahlmittel aus dem Sammelkasten 103. Hierzu ist ihr eine Strahlmittel-Rückführungsvorrichtung 111 zugeordnet, die an das Auslaßrohr 107 angeschlossen ist und ein im Querschnitt vorzugsweise rundes Aufnahmerohr 112 aufweist, daß das Auslaßrohr 107 quer, vorzugsweise senkrecht in Querbohrungen 113,114 durchfaßt. Das Aufnahmerohr 112 weist an seinem oberen Ende eine zylindrische Verdickung 115 auf, in deren Mantelfläche eine Ringnut angeordnet ist, in der sich ein elastischer Dichtungsring befindet. Oberhalb der Ringnut ist in einem Querloch ein Arretierstift 118 eingepreßt, der die Mantelfläche der Verdickung 115 überragt. Der Innenquerschnitt des Aufnahmerohrs 112 ist an seinem oberen Ende erweitert. In diese erweiterte Ausnehmung 119 kann ggfls. ein Filter eingesetzt werden. Zur Stabilisierung der Lagerung für das Aufnahmerohr 112 sind die Querbohrungen 113,114 in an die Wandung des Auslaßrohrs 107 angeformten Stutzen 121,122 angeordnet. Am oberen Ende des oberen Stutzens 121 ist ein Schlitz vorgesehen, der den Arretierstift 118 aufnimmt. Hierdurch ist das Aufnahmerohr 112 gegen Drehen und weitere Verschiebung nach unten lagegesichert. Im Bereich des freien Querschnitts des Auslaßrohrs 107 ist auf der dem Sammelkasten 103 zugewandten Seite des Aufnahmerohrs 112 wenigstens eine öffnung 123 vorzugsweise in Form eines sich vertikal erstreckenden Schlitzes vorgesehen, die unten in etwa mit der unteren Innenwand des Auslaßrohrs 107 abschließt, und durch die benutztes Strahlmittel aus dem Auslaßrohr 107 in das Aufnahmerohr 112 gelangen kann. In den unteren Stutzen 122 ist vorzugsweise koaxial eine Anschlußarmatur 124 eingeschraubt, an die eine Rohrleitung 125 angeschlossen ist, die mit der stationären Strahldüse 51 verbunden ist. Die Rohrleitung 125 erstreckt sich durch die Hohlräume 81,81a und durchfaßt eine Durchführungsverschraubung 126 in der inneren Rückwand 59. Vorzugsweise besteht die Rohrleitung 125 aus flexiblem Material in Form eines Schlauches, und sie kann in den Hohlräumen 81,81a von einer Schutzrohrleitung umgeben sein, die sich zwischen der Anschlußarmatur 124 und der Durchführungsverschraubung 126 erstrecken kann. Wie bereits bei den Strahlleitungen 53a,53b,53c ist auch hierdurch ein schneller und handhabungsfreundlicher Austausch der Rohrleitung 125 gewährleistet.

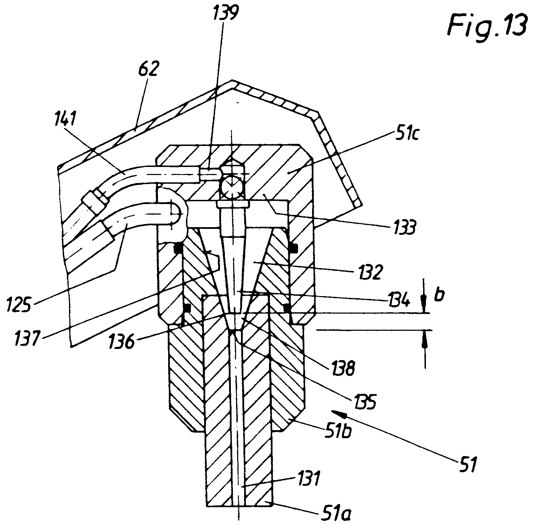

Die stationäre Strahldüse 51 weist gemäß Fig. 13 einen axialen Düsenkanal 131 auf, der von einem zur Düsenspitze hin vorzugsweise kegelförmig konvergenten Injektionsraum 132 ausgeht. Im der Düse abgewandten Endbereich des Injektionsraums 132 ist die Rohrleitung 125 radial mittels eines Leitungsanschlusses dicht angeschlossen. In einer den Injektionsraum 132 auf der der Düsenspitze abgewandten Seite begrenzenden Querwand 133 der Strahldüse 51 ist koaxial zum Düsenkanal 131 und zum Injektionsraum 132 eine rohrförmige Innendüse 134 mit einem Fuß in einem Aufnahmeloch fest eingesetzt, die sich bis kurz vor das vordere Ende des konvergenten Injektionsraums 132 erstreckt und vom Eingangsloch 135 des Düsenkanals 131 einen Abstand b von einigen Millimetern aufweist. Dabei ist zwischen dem sich vorzugsweise kegelförmig verjüngenden vorderen Ende 136 der Innendüse 134 und der konvergenten Innenmantelfläche 137 des Injektionsraums 132 ein kleiner Ringspalt 138 vorhanden. Die Innendüse 134 ist mit einem Zuführungskanal in der Querwand 133 verbunden, an den mittels eines ggfls. radialen Verbindungskanals 139 eine vorzugsweise flexible Druckluft-Zuführungsleitung 141 angeschlossen ist, die z.B. vom Hohlraum 81a ausgeht und die innere Rückwand 59 in einer Durchführungsverschraubung durchsetzt und an die vorhandene Druckluft-Zuführungsversorgung angeschlossen ist, von der lediglich der im unteren Bereich der Rückwand 21 angeordnete Eingangsanschluß 142 (in Fig. 2) andeutungsweise dargestellt ist. Vorzugsweise ist der Düsenkanal 131 in einem zylindrischen Düsenrohr 51a angeordnet, das von vorne in einen Düseneinsatz 51b fest eingesetzt ist. Das Düsenrohr 51a überlappt das vordere Ende 136 der Innendüse 134 mit einem konischen Kanalabschnitt, der den vorderen Teil des Injektionsraums 132 bildet. Der Düseneinsatz 51b ist von vorn in einen Düsenhaltekörper 51c vorzugsweise axial verstellbar eingesetzt arretiert und abgedichtet, wobei zwischen der Querwand 133 und dem Düseneinsatz 51b ein Abstand vorgesehen ist.

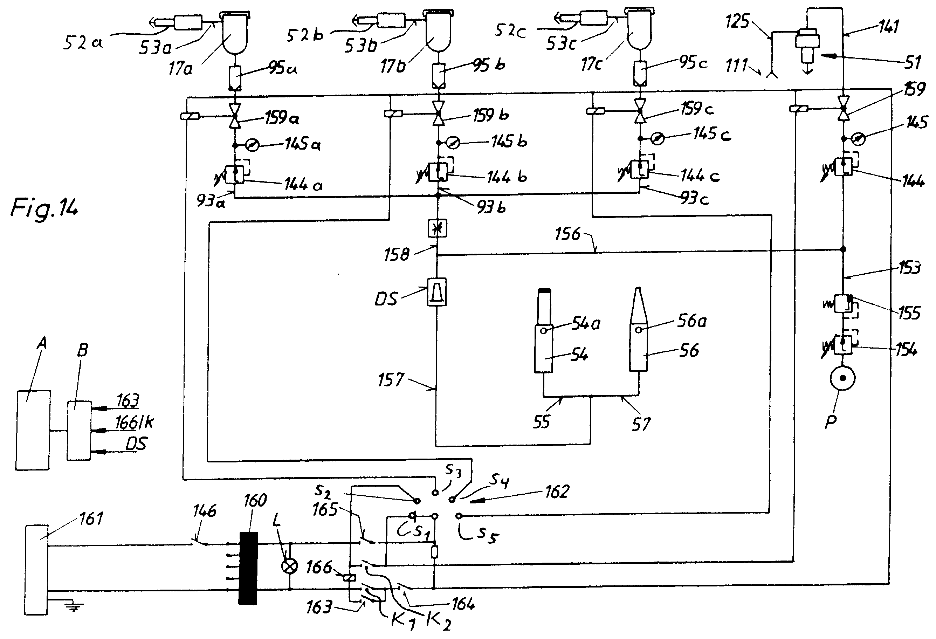

Zur Steuerung des Bearbeitungsgeräts 1 sind vier Einstellglieder 143 (Fig. 4) in Form von Drehknöpfen vorgesehen, mit denen über nur in Fig. 14 dargestellte Druckregler 144 der Luftdruck in jeder der vier vorhandenen Strahleinrichtungen in einem gewissen Einstellbereich einstellbar ist. Der jeweilige Druck wird durch vier Manometer 145 angezeigt, die an die zugehörigen Druckluftleitungsabschnitte angeschlossen sind. Außerdem sind drei weitere Einstellglieder 146,147,148 vorgesehen, deren Funktion noch beschrieben wird. Die Einstellglieder 143 und die Manometer 145 sind vorzugsweise in einer unteren und die Einstellglieder 146,147,148 in einer oberen horizontalen Reihe auf der schrägen Vorderteilwand 14 angeordnet, wobei vorzugsweise die untere Reihe in einer horizontalen muldenförmigen Vertiefung 151 angeordnet ist, die durch einen Klappdeckel 152 verschließbar ist.

Im folgenden wird die Steuerung und Funktion des Bearbeitungsgeräts 1 anhand des Steuerplans gemäß Fig. 14 beschrieben. Die von einer geräteexternen oder geräteinternen Druckquelle P erzeugte Druckluft steht in einer Eingangsrohrleitung 153 an, in der ein durch das Einstellglied 147 einstellbarer Druckregler 154 und ein Sicherheitsventil 155 in Strömungsrichtung hintereinander angeordnet sind. Die Eingangsrohrleitung 153 verzweigt in die Zuführungsleitung 141, die zur stationären Strahldüse 51 führt, und eine Zweigleitung 156, die in zwei weitere Zweigleitungen 157,158 verzweigt. In der Zuführungsleitung 141 sind in Strömungsrichtung eines der bereits beschriebenen Druckregler 144, das zugehörige Manometer 145 und ein elektromagnetisches Absperrventil 159 angeordnet. In der Zweigleitung 157 ist ein Durchflußsensor DS angeordnet. Die beiden flexiblen Versorgungsleitungen 55 und 57 für den Meißel 54 und die Luftdüse 56 zweigen von der Zweigleitung 157 ab. Die Zweigleitung 158, in der eine vorzugsweise verstellbare Drossel angeordnet ist, verzweigt in die drei Zuführungsleitungen 93a,93b,93c, die an die zugehörigen Strahlmittelbehälter 17a,17b,17c angeschlossen sind und in denen jeweils ein durch das zugehörige Einstellglied 143 beaufschlagbarer Druckregler 144a,144b,144c, das zugehörige Manometer 145a,145b,145c, ein zugehöriges elektromagnetisches Absperrventil 159a,159b,159c und das zugehörige Luftfilter 95a,95b,95c in Strömungsrichtung hintereinander angeordnet sind. Der Meißel 54 und die Luftdüse 56 weisen jeweils ein manuell betätigbares Schaltglied 54a,56a zu ihrer Ein- und Ausschaltung auf.

Im folgenden wird die Funktion anhand des elektrischen Schaltkreises der vorhandenen Steuereinrichtung beschrieben.

Die Primärseite eines Netztransformators 160 ist über einen Hauptschalter 146a mit dem Netz 161 verbunden. An den beiden Ausgangsanschlüssen der Sekundärseite des Netztransformators 160 liegt eine Kontrollampe L, die leuchtet, wenn der Hauptschalter 146a geschlossen ist.

An den Ausgang des Netztransformators 160 sind ferner ein Halterelais 166 mit Selbsthaltekontakten K₁ und K₂, ein Fußschalter 163, zwei Schalter 164 und 165 und ein durch das Einstellglied 148 steuerbarer Um- bzw. Wählschalter 162 angeschlossen. Der Schalter 164 wird geschlossen, wenn die Schublade 16 eingeschoben wird. Der Schalter 165 wird geschlossen, wenn das Sichtfenster 23 geschlossen wird.

Die Verbindung der vorstehend erwähnten elektrischen Elemente kann der Fig. 14 entnommen werden und soll nicht im einzelnen erläutert werden. Erläutert werden soll lediglich die Funktion.

Es sei zunächst davon ausgegangen, daß der Wählschalter 162 sich in der Schaltstellung S₁ befindet. Wenn der Hauptschalter 146a und der Fußschalter 143 geschlossen werden, so wird das Magnetventil 159 für die Strahldüse 51 geöffnet, wodurch die Strahldüse 51 in Betrieb gesetzt wird solange der Fußschalter 143 geschlossen bleibt.

Wenn bei geschlossenem Hauptschalter 146a der Wählschalter 162 in die Schaltposition S₂ gesetzt wird, so wird der Relaismagnet 166 unter Strom gesetzt, und die Selbsthaltekontakte K₁,K₂ werden geschlossen. Dadurch wird das Magnetventil 159 geöffnet und die Strahldüse 51 in Dauerbetrieb gesetzt.

Wenn bei geschlossenem Hauptschalter 146a der Wählschalter 162 in die Schaltposition S₃ umgeschaltet wird, so wird mit dem Schließen des Fußschalters 163 das Magnetventil 159a für die Strahldüse 52a geöffnet. Wenn der Fußschalter 163 wieder freigegeben wird, so wird das Magnetventil 159a für die Strahldüse 52a wieder geschlossen.

In der Schaltstellung S₄ des Wählschalters 162 wird bei geschlossenem Hauptschalter 146a das Magnetventil 159b geöffnet und somit die Strahldüse 52b in Betrieb gesetzt.

In der Schaltstellung S₅ des Wählschalters 162 wird bei geschlossenem Hauptschalter 146a und geschlossenem Fußschalter 163 das Magnetventil 159c geöffnet und die Strahldüse 52c in Betrieb gesetzt.

Bei geschlossener Schublade 16 sowie geschlossenem Sichtfenster 23 kann somit die durch den Wählschalter 162 voreingestellte Strahleinrichtung durch Betätigen des Fußschalters 163 in Betrieb genommen werden.

Das Bearbeitungsgerät 1 eignet sich zur Oberflächenbehandlung von feinwerktechnischen Werkstücken verschiedenster Art, insbesondere der Schmuckindustrie, Archäologie, des allgemeinen Maschinenbaus und insbesondere der Dentaltechnik. Dabei eignet sich das Bearbeitungsgerät 1 nicht nur zum Strahlen mittels körnigem Strahlmittel sondern auch zum Ausbetten und/oder Ausblasen des Werkstücks bzw. der Behandlungsstelle. Durch Strahlen lassen sich Oberflächen reinigen, Oberflächenkonditionierungen zur Oberflächenvergrößerung und Haftungssteigerung einer Beschichtung vornehmen, was insbesondere bei dentaltechnischen Werkstücken von Bedeutung ist, und insbesondere beim Herstellen von detaltechnischen Modellgußteilen Einbettmassereste entfernen. Zum Strahlen kann sowohl die im stationäre Strahldüse 51 oder eine der beweglichen Strahldüsen 52a,52b,52c bzw. Strahlgriffel eingesetzt werden, wobei das gewünschte Strahlmittel oder die gewünschte Körnung ausgewählt werden kann. Dabei kann Umlaufstrahlung oder Einwegstrahlung gewählt werden.

Mit den beweglichen Strahldüsen läßt sich am vorhandenen Werkstück ganz gezielt arbeiten. Eine wesentliche Forderung für dentaltechnische Kronen besteht z.B. darin, daß die Innenkante des Kronenrandes scharfkantig sein soll, um nach dem Aufsetzen der Krone am Kronenrand einen dichten Abschluß zu haben und den Zutritt von Bakterien zu verhindern. Dies läßt sich insbesondere durch gezieltes Strahlen mittels beweglichen Strahldüsen erreichen. Insbesondere bei dentaltechnischen Gußstücken kann das Gußstück vor dem Strahlen im Bearbeitungsgerät ausgebettet werden, wozu elektrisch oder pneumatisch antreibbare Ausbettwerkzeuge vorzusehen sind, beim vorliegenden Ausführungsbeispiel der Pneumatikmeißel 54. Je nach Zustand des ausgebetteten Gußstücks können anschließend Einbettmassereste durch Strahlung entfernt werden und es kann die Bearbeitungsstelle oder es kann grundsätzlich aus- oder abgeblasen werden.

Bei Einschaltung der Umlaufstrahleinrichtung mit der Strahldüse 51 strömt Druckluft durch die Zuführungsleitung 141 und die Innendüse 134 und injiziert im Bereich des Ringspalts 138 eine Saugluftströmung in der Rohrleitung 125. Aufgrund dieser Saugluftströmung wird im Auslaßrohr 107 vorhandenes Strahlmittel durch den Schlitz 123 eingesaugt und durch die Saugluftströmung vor die Spitze der Innendüse 134 transportiert, wo sich die Druckluft, die Saugluft und das Strahlmittel miteinander vermischen und als Druckluftströmung durch die Strahldüse 51 austreten. Die Strahldüse 51 funktioniert dabei als Injektorsystem. Physikalisch bedingt können dabei Schwankungen in der Druckluftströmung auftreten, so daß sich eine intermitierende (pumpende) Strahlwirkung einstellen kann. Es ist festgestellt worden, daß durch die Fehlluftansaugung am hintern Ende des Aufnahmerohrs 112 eine gleichmäßige Luftströmung und daraus resultierend eine gleichmäßige Strahlwirkung erreicht wird. Die gleichmäßige Luftströmung führt auch zu einer vergleichmäßigten Fluidisierung des in den Schlitz 123 eingesaugten Strahlmittels, was zur vergleichmäßigten Strahlwirkung beiträgt. Bei der Umlaufstrahlung wird ein Strahlmittel benutzt, dessen Zusammensetzung von der vorherigen Strahlbehandlung abhängig ist, da das bei einer vorherigen Strahlbehandlung benutzte Strahlmittel sich im Sammelkasten 103 sammelt und somit ein Strahlmittelgemisch umfassen kann.

Bei Einschaltung einer Einwegstrahlung, die beim vorliegenden Ausführungsbeispiel mit drei verschiedenen Strahlmittelarten ausgeführt werden kann, wird jeweils unbenutztes Strahlmittel zur Strahldüse 52a,52b,52c geführt. Dabei wird jeweils die gewählte Druckluft-Zuführungsleitung 93a,93b,93c durch öffnen des zugehörigen Absperrventils 159a,159b,159c in Funktion gesetzt. Durch den aus dem Kanal 89 nach oben in den Hohlraum 65a des zugehörigen Strahlmittelbehälters 17a,17b,17c einströmenden Druckluftstrom wird das darin befindliche Strahlmittel 65b oberhalb des Topfbodens 66 und im Steigrohr 69 fluidisiert und nach oben mitgerissen, wobei dieses Druckluft-Strahlmittel-Gemisch durch die Strahlleitungen 53a,53b,53c zur zugehörigen Strahldüse 52a,52b,52c geführt wird. Es hat sich gezeigt, daß diese Fluidisierung unabhängig ist von der Füllhöhe des Strahlmittels im Strahlmittelbehälter. Hierdurch läßt sich ein von der Füllhöhe unabhängiger gleichmäßiger Druckluft-StrahlmittelGemischstrom erzeugen.

Das Strahlen wird je nach Art des Strahlmittels und seiner Körnung bei Luftdrücken zwischen 1,5 und 6 bar durchgeführt.

Das Ausbetten, Ausblasen und/oder Strahlen der Werkstücke erfolgt mit den durch die Durchgrifflöcher 36 in den Behandlungsraum 31 eingesteckten Hände der Bedienungsperson. Das Auflagerteil 33 erweist sich dabei als vorteilhafte Stützauflage für die Hände und/oder das Werkstück, so daß durch Handunruhe hervorgerufene Fehlbehandlungen des Werkstücks ausgeschaltet werden können.

Insbesondere bei intensiver Strahlung wie beim Umlaufstrahlen, bei dem mit höheren Drücken und größerem Strahlmitteldurchsatz gearbeitet wird, ist eine Beaufschlagung der Sichtfensterscheibe 27 kaum zu vermeiden. Eine Beaufschlagung der Scheibe 27 ist unerwünscht, weil das Glas innenseitig abnutzt und stumpf sowie undurchsichtig wird. Vorzugsweise ist deshalb die Scheibe 27 mit einer innenseitigen durchsichtigen Beschichtung aus verschleißfestem Material versehen. Diese Beschichtung ist auch aus Unfallverhütungsgründen vorteilhaft, weil bei einem Scheibenbruch die Bechichtung die Bruchstücke der Scheibe zusammenhält.

Außerdem ist zum Schutz der Scheibe 27 innen ein Schutzsieb 171 aus Metall oder Kunststoff vorgesehen, das zwischen einer nahe vor der Scheibe 27 angeordneten Arbeitsstellung (in Fig. 2 mit durchgezogenen Linien dargestellt) und einer das Sichtfenster 23 freigebenden Bereitschaftsstellung (in Fig. 2 strichpunktiert angedeutet) verschwenkbar. In der jeweiligen Schwenkendstellung ist das Schutzsieb 171 durch Anschläge positioniert, gegen die es aufgrund seiner Schwerkraft anliegt. Eine selbsttätige Verstellung ist deshalb ausgeschlossen. Die Schwenkachse 172 des Schutzsiebes 171 erstreckt sich vorzugsweise parallel zur Bedienungsseite 7 etwa horizontal im mittleren Bereich des Behandlungsraums 31, so daß das Schutzsieb 171 aus seiner im vorderen Bereich des Behandlungsraums 31 oben befindlichen Arbeitsstellung in eine im hinteren Bereich des Behandlungsraums 31 oben befindliche Bereitschaftsstellung schwenkbar ist. Das Schutzsieb 171 ist an seitlichen Tragschenkeln 173 befestigt, die sich innenseitig in der Nähe der Seitenwände 9 des Strahlgehäuses 3 jeweils zu einem im Bereich der Schwenkachse 172 angeordneten, an der zugehörigen Seitenwand 9 befestigten Schwenklager 174 erstrecken und darin schwenkbar gelagert sind. Die vorzugsweise aus flachen, parallel zu den Seitenwänden 9 angeordneten Tragschenkel 173 können mit oberen Schenkelarmen 173 (Fig. 1) winkelförmig ausgestaltet sein, wenn das Schutzsieb 171 wesentlich schmaler bemessen ist, als die Breite des Behandlungsraums 31. Das Schutzsieb 171 ist mittig zur stationären Strahldüse 51 und vorzugsweise auch mittig zum Behandlungsraum 31 angeordnet. Vorzugsweise sind die Schwenklager 174 durch Lagerzapfen und zugehörige Lagerbohrungen ausgebildet, die an den Tragschenkeln 173 oder an den Seitenwänden 9 angeordnet sein können. Vorzugsweise stehen die Tragschenkel 173 in ihrer Lagerposition unter einer nach außen gerichteten Spannung, wobei sie elastisch einbiegbar sind, um sie aus den Schwenklagern 174 handhabungsfreundlich und einfach zu lösen bzw. wieder einzuführen. Auf diese Weise ist eine einfache und schnelle Montage bzw. Demontage und ein handhabungsfreundlicher Austausch des Schutzsiebes 171 bei Verschleiß möglich. Zur Positionierung in der Arbeitsstellung kann an wenigstens einer Seitenwand 9 ein Anschlagstück 175 vorgesehen sein, gegen das die Tragschenkel 173 in der zugehörigen Schrägstellung des Schutzsiebes 171 unter Eigengewicht anliegt. In der Bereitschaftsstellung, in die das Schutzsieb 171 über die stationäre Strahldüse 51 und deren Tragarm 62 geschwenkt wird, kann das Schutzsieb 171 durch die Rückwand 79 des Behandlungsraums 31 oder den Tragarm 62 als Anschlag begrenzt sein.

Das Gehäuse 2 bzw. das Strahlgehäuse 3 und das Untergehäuse 4 können aus Kunststoff bestehen und vorzugsweise geschäumt sein, z.B. aus Polyurethan (PU), oder aus Metall, insbesondere Stahlblech bestehen. Zur Beleuchtung des Arbeitsraumes 31 ist im Firstbereich innen eine oder zwei Röhrenlampen 177 aufweisende Beleuchtung vorgesehen.

Im Betrieb des Bearbeitungsgeräts 1 wird bei Benutzung der Strahleinrichtungen, des Pneumatikmeißels 54 und der Luftdüse 56 fortwährend Druckluft in den Behandlungsraum 31 eingeführt, wobei bei der Behandlung des Werkstücks je nach dessen Material, z.B. Quarz, gesundheitsgefährdende Teilchen bzw. Stäube in den Behandlungsraum 31 gelangen. Deshalb ist dem Bearbeitungsraum 31 eine Absaugöffnung zugeordnet, durch die hindurch der Behandlungsraum 31 mittels einer Absaugvorrichtung A (nur in Fig. 14 angedeutet) abgesaugt werden kann, deren elektrische Ein- bzw. Abschaltung mit der Funktion des Fußschalters 163, des Halterelais 166 und des eine Schaltfunktion ausführenden Durchflußsensors DS mittels eines Odergliedes B automatisch erfolgt, d.h. in Abhängigkeit von der Funktion der Strahleinrichtungen, des Meißels 54 oder der Lufdüse 56. Die Absaugvorrichtung A weist einen Abscheider für Partikel und Staub auf. Der Durchflußsensor DS ist im Hohlraumteil 81 angeordnet.

Die Absaugöffnung wird durch einen Absaugschlitz 178 im Zwischenboden 32 an dessen hinteren Ende gebildet. Die Länge des Absaugschlitzes 178 kann der Breite des Zwischenbodens 32 entsprechend oder geringer bemessen sein. Von der Hinterkante des Zwischenbodens 32 erstreckt sich parallel zur Rückwand 179 des Sammelkastens 103 eine Trennwand 181 bis in die Nähe des unteren Endes des Sammelkastens 103, die sich bis zu den schrägen Seitenwänden 182 des Sammelkastens 103 erstreckt und somit einen sich vom Absaugschlitz 178 nach unten erstreckenden Absaugschacht 18 begrenzt, der unten durch eine die untere Kante der Trennwand 181 mit der Rückwand 179 verbindende Bodenwand 184 verschlossen ist. Da die Seitenwände 182 auch den Absaugschacht 183 seitlich begrenzen, konvergiert dieser nach unten ebenfalls.

Um zu verhindern, daß Strahlmittel vom Zwischenboden 32 in den Absaugschlitz 178 fällt, ist an dessen Vorderkante eine Stegwand 181a angeordnet, die sich seitlich bis zu den Seitenwänden 9 und nach oben bis etwa zur mittleren Arbeitsraumhöhe und seitlich den Absaugschlitz umgibt oder sich bis zu den Seitenwänden erstreckt. Hierdurch wird der Absaugschacht über den Zwischenboden 32 hinaus nach oben verlängert. Vorzugsweise ragen die deponierten Strahldüsen 52a,52b,52c und ggfls. auch die deponierte Luftdüse 56 in den verlängerten Absaugschacht 183 hinein.

Oberhalb der Bodenwand 184 ist in der Rückwand 179 ein vorzugsweise rundes Loch 185 vorgesehen, von dessen Rand sich ein Anschlußstutzen 186 nach unten und hinten erstreckt. Auf den Anschlußstutzen 186 ist mittels eines Rohrstutzens 187 ein Absaugschlauch 188 aufsteckbar und klemmbar, der sich zum vorderen Bereich des Untergehäuses 4 und z.B. zwischen den zweiten und dritten Strahlmittelbehälter 17b,17c erstreckt, wo im Bereich der Schublade 16 die Bodenwand des Gehäuses fehlt. Von hier aus erstreckt sich der Absaugschlauch 188 nach unten, wobei er einen Anschlußstutzen für einen daran anzuschließenden Absaugschlauchabschnitt der Absaugvorrichtung A bilden kann.

## Patentansprüche

1. Bearbeitungsgerät (1) zum Bearbeiten von feinwerktechnischen, insbesondere dentaltechnischen Werkstücken in einem von einem Gehäuse (2) umgebenen Bearbeitungsraum (31) mit einem Sichtfenster (23) und mit zwei zu beiden Seiten des Sichtfensters (23) angeordneten Durchgriffslöchern (36) im Gehäuse (2), wobei der Bearbeitungsraum (31) an eine Absaugeinrichtung (A) angeschlossen oder anschließbar ist und im Bearbeitungsraum (31) wenigstens eine bewegliche Strahldüse (52a, 52b, 52c) zum Strahlen der Werkstücke angeordnet sind,
**dadurch gekennzeichnet,**
daß im Bearbeitungsraum (31) ein zusätzlich an eine flexible Versorgungsleitung (55) angeschlossener elektrisch oder pneumatisch antreibbarer Meißel (54) zum Ausbetten der Werkstücke sowie eine stationär angeordnete Strahldüse (51) vorgesehen sind.

2. Bearbeitungsgerät nach Anspruch 1,
**dadurch gekennzeichnet,**
daß im Bearbeitungsraum (31) weiterhin eine Druckluftdüse (56) angeordnet ist, die an eine flexible Versorgungsleitung (55, 57) angeschlossen ist.

3. Bearbeitungsgerät nach Anspruch 1 oder 2,
**dadurch gekennzeichnet,**
daß die stationär angeordnete Strahldüse (51) an eine Umlaufstrableinrichtung, und/die beweglich angeordneten Strahldüsen (52a, 52b, 52c) an eine Einwegstrahleinrichtung angeschlossen ist/sind.

4. Bearbeitungsgerät nach Anspruch 1 oder 2,
**dadurch gekennzeichnet,**
daß die stationäre Strahldüse (51) an eine Umlaufstrahleinrichtung angeschlossen ist und daß mehrere, vorzugsweise drei, bewegliche Strahldüsen (52a, 52b, 52c) vorgesehen sind, die jeweils an eine eigene insbesondere Einwegstrahleinrichtung angeschlossen sind.

5. Bearbeitungsgerät nach wenigstens einem der vorherigen Ansprüche,
**dadurch gekennzeichnet,**
daß die stationär angeordnete Strahldüse (51) im oberen Bereich des Bearbeitungsraums (31), vorzugsweise mittig angeordnet ist.

6. Bearbeitungsgerät nach einem der vorherigen Ansprüche,
**dadurch gekennzeichnet,**
daß die stationär angeordnete Strahldüse (51) in einer rechtwinklig zur Bedienungsseite (7) stehenden Vertikalebene schwenkbar und im wesentlichen horizontal oder schräg linear verstellbar und in der jeweiligen Einstellung feststellbar ist.

7. Bearbeitungsgerät nach wenigstens einem der vorherigen Ansprüche 2 bis 6,
**dadurch gekennzeichnet,**
daß wenigstens eine, vorzugsweise alle beweglichen Strahldüsen (52a, 52b, 52c), und/oder der Meißel (54) und/oder die Luftdüse (56) jeweils in einer an der Rückseite (59) des Bearbeitungsraums (31) angeordneten Deponiereinrichtung deponierbar ist/sind.

8. Bearbeitungsgerät nach Anspruch 7,
**dadurch gekennzeichnet,**
daß die Deponiereinrichtungen Steckvorrichtungen sind, in die wenigstens eine bewegliche Strahldüse (52a, 52b, 52c), der Meißel (54) und/oder die Luftdüse (56) von oben einsteckbar sind.

9. Bearbeitungsgerät nach Anspruch 8,
**dadurch gekennzeichnet,**
daß die Steckvorrichtungen durch eine horizontale Leiste (61) gebildet sind, in der vertikale Stecklöcher (58) angeordnet sind.

10. Bearbeitungsgerät nach wenigstens einem der vorherigen Ansprüche,
**dadurch gekennzeichnet,**
daß im hinteren Bereich des Bearbeitungsraums (31) in dessen Boden (32) ein sich vorzugsweise über dessen Gesamtbreite erstreckender Absaugschlitz (178) angeordnet ist, der durch ein Rohrleitungssystem mit der Absaugeinrichtung (A) verbunden ist.

11. Bearbeitungsgerät nach Anspruch 10,
**dadurch gekennzeichnet,**
daß die Öffnung des Absaugschlitzes (178) durch eine ihn an dessen Vorderkante und ggf. auch an dessen Seitenkanten begrenzende aufrechte Stegwand (181a) von der Bodenwand (32) nach oben versetzt ist.

12. Bearbeitungsgerät nach Anspruch 11,
**dadurch gekennzeichnet,**
daß die Öffnung des Absaugschlitzes (178) sich in etwa in mittlerer Höhe im Bearbeitungsraum (31) oder in mittlerer Höhe zwischen der Bodenwand (32) des Bearbeitungsraums und der stationär angeordneten Strahldüse (51) befindet.

## Claims

1. A machining device (1) for machining precision, in particular dental, workpieces in a machining chamber (31) surrounded by a housing (2), having an inspection window (23) with two gripping holes (36) arranged to the two sides of the inspection window (23), wherein the machining chamber (31) is preferably connected or connectable to a suction device (A) and arranged in the machining chamber (31) is at least one movable blasting nozzle (52a, 52b, 52c) for blasting the workpiece,
characterised in that,
there are provided in the machining chamber (31) an electrically or pneumatically drivable chisel (54), additionally connected to a flexible supply line (55), for de-moulding the workpieces, and a blasting nozzle (51) arranged to be stationary.

2. A machining device according to claim 1,
characterised in that,
there is further arranged in the machining chamber (31) a compressed air nozzle (56) which is connected to a flexible supply line (55, 57).

3. A machining device according to claim 1 or 2,
characterised in that,
the blasting nozzle (51) arranged to be stationary is connected to a circulatory blasting device and the movably arranged blasting nozzles (52a, 52b, 52c) is or are connected to a one-way blasting device.

4. A machining device according to claim 1 or 2,
characterised in that,
the stationary blasting nozzle (51) is connected to a circulatory blasting device, and in that several, preferably three, movable blasting nozzles (52a, 52b, 52c) are provided which are each connected to their own, in particular one-way, blasting device.

5. A machining device according to any preceding claim,
characterised in that,
the stationary blasting nozzle (51) is arranged in the upper region, preferably centrally, of the machining chamber (31).

6. A machining device according to any preceding claim,
characterised in that,
the blasting nozzle (51) arranged to be stationary can be pivoted in a vertical plane that is at right angles to the operating side (7) and can be displaced substantially horizontally or obliquely linearly and can be fixed in the relevant position.

7. A machining device according to any of claims 2 to 6,
characterised in that,
at least one, preferably all movable blasting nozzles (52a, 52b, 52c), and/or the chisel (54) and/or the air nozzle (56) can each be deposited in a depositing arrangement arranged at the rear side (59) of the machining chamber (31).

8. A machining device according to claim 7,
characterised in that,
the depositing arrangements are socket-type devices into which the at least one movable blasting nozzle (52a, 52b, 52c), the chisel (54) and/or the air nozzle (56) can be inserted from the top.

9. A machining device according to claim 8,
characterised in that,
the socket devices are formed by a horizontal ledge (61) in which vertical socket holes (58) are arranged.

10. A machining device according to any preceding claim,
characterised in that,
arranged in the rear region of the machining chamber (31) in its floor (32) is a suction slit (178) preferably extending over its entire width and which is connected by a tube line system to the suction device (A).

11. A machining device according to claim 10,
characterised in that,
the opening of the suction slit (178) is offset upwardly from the floor wall (32) by an upright web wall (181a) bounding the slit at its front edge and possibly also its side edges.

12. A machining device according to claim 11,
characterised in that,
the opening of the suction slit (178) is located at about mid-height in the machining chamber (31) or at mid-height between the floor wall (32) of the machining chamber and the stationary blasting nozzle (51).

## Revendications

1. Appareil de traitement (1) pour le traitement de pièces de petite mécanique, notamment de pièces de dentisterie dans une chambre de traitement (31) entourée d'une enveloppe (2) comportant une fenêtre (23) et deux trous (36) d'intervention aménagés dans l'enveloppe (2), de chaque côté de la fenêtre (23), la chambre de traitement (31) étant raccordée ou pouvant être raccordée à un dispositif d'extraction (A) et au moins une buse de projection (52a, 52b, 52c) mobile pour le traitement par projection des pièces étant disposée dans la chambre de traitement (31),
caractérisé par le fait qu'il est prévu en outre dans la chambre de traitement (31) un burin (54) entraîné électriquement ou pneumatiquement connecté à une conduite (55) souple d'alimentation pour le démoulage des pièces ainsi qu'une buse de projection (51) stationnaire.

2. Appareil de traitement selon la revendication 1, caractérisé par le fait qu'une buse (56) à air comprimé qui est connectée à une conduite (55, 57) souple d'alimentation est également disposée dans la chambre traitement (31).

3. Appareil de traitement selon la revendication 1 ou 2, caractérisé par le fait que la buse (51) de projection stationnaire est connectée à un dispositif de projection à recyclage et les buses de projection (52a, 52b, 52c) mobiles sont connectées à un dispositif de projection sans recyclage.

4. Appareil de traitement selon la revendication 1 ou 2, caractérisé par le fait que la buse de projection (51) stationnaire est connectée à un dispositif de projection à recyclage et par le fait qu'il est prévu plusieurs, de préférence trois, buses de projection (52a, 52b, 52c) mobiles qui sont connectées chacune à un dispositif de projection propre, notamment à un dispositif de projection sans recyclage.

5. Appareil de traitement selon au moins une des revendications précédentes, caractérisé par le fait que la buse de projection (51) stationnaire est disposée dans la région supérieure de la chambre de traitement (31), de préférence au milieu de celle-ci.

6. Appareil de traitement selon au moins une des revendications précédentes, caractérisé par le fait que la buse de projection (51) stationnaire peut pivoter dans un plan vertical perpendiculaire à la face de commande (7) et peut être amenée essentiellement dans une position horizontale ou inclinée et immobilisée dans la position correspondante.

7. Appareil de traitement selon au moins une des revendications 2 à 6 précédentes, caractérisé par le fait qu'au moins une, de préférence toutes les buses de projection (52a, 52b, 52c) mobiles et/ou le burin (54) et/ou la buse à air (56) peut/peuvent être déposé(s) chacun dans un dispositif support disposé sur la face arrière (59) de la chambre de traitement (31).

8. Appareil de traitement selon la revendication 7, caractérisé par le fait que les dispositifs supports sont des dispositifs à enfichage dans les quels au moins une buse de projection (52a, 52b, 52c) mobile, le burin (54) et/oui la buse à air (56) peuvent être enfichés par le haut.

9. Appareil de traitement selon la revendication 8, caractérisé par le fait que les dispositifs à enfichage sont constitués d'une barre (61) horizontale, dans laquelle sont disposés des trous (58) verticaux.

10. Appareil de traitement selon au moins une des revendications précédentes, caractérisé par le fait qu'une fente d'extraction (178) est aménagée dans la région arrière de la chambre de traitement (31), dans le fond (32) de celle-ci et de préférence sur toute la largeur de celle-ci, laquelle fente est reliée au dispositif d'extraction (A) par un système de tuyauteries.

11. Appareil de traitement selon la revendication 10, caractérisé par le fait que l'orifice de la fente d'extraction (178) est décalé vers le haut par rapport au fond (32) par une paroi (181a) verticale disposée sur le bord antérieur et éventuellement sur les côtés de ladite fente.

12. Appareil de traitement selon la revendication 11, caractérisé par le fait que l'orifice de la fente d'extraction (178) est situé sensiblement à mi-hauteur dans la chambre de traitement (31) ou à mi-hauteur entre le fond (32) de la chambre de traitement et la buse de projection (51) stationnaire.
